**Europäisches Patentamt**

**European Patent Office**

**Office européen des brevets**

(19)

(11) Veröffentlichungsnummer : **0 364 682 B1**

(12) # EUROPÄISCHE PATENTSCHRIFT

(45) Veröffentlichungstag der Patentschrift :
**03.06.92 Patentblatt 92/23**

(51) Int. Cl.$^5$ : **B60T 8/48,** B60T 8/44, B60K 28/16

(21) Anmeldenummer : **89114491.7**

(22) Anmeldetag : **05.08.89**

(54) **Blockier- und/oder Schleuderschutzverfahren für Nutzkraftwagen.**

(30) Priorität : **21.10.88 DE 3835906**

(43) Veröffentlichungstag der Anmeldung :
**25.04.90 Patentblatt 90/17**

(45) Bekanntmachung des Hinweises auf die Patenterteilung :
**03.06.92 Patentblatt 92/23**

(84) Benannte Vertragsstaaten :
**DE FR GB IT SE**

(56) Entgegenhaltungen :
**DE-A- 3 400 566**
**DE-A- 3 700 716**

(73) Patentinhaber : **WABCO Westinghouse Fahrzeugbremsen GmbH Am Lindener Hafen 21 Postfach 91 12 80 W-3000 Hannover 91 (DE)**

(72) Erfinder : **Petersen, Erwin, Dr. Fliederweg 22 W-3050 Wunstorf 1 (DE)**

(74) Vertreter : **Schrödter, Manfred WABCO Westinghouse Fahrzeugbremsen GmbH Am Lindener Hafen 21 Postfach 91 12 80 W-3000 Hannover 91 (DE)**

EP 0 364 682 B1

## Beschreibung

Die Erfindung bezieht sich auf eine Blockier- und/oder Schleuderschutz-Verfahren für Nutzkraftwagen gemäß dem Oberbegriff des Patentanspruchs 1.

Der Blockierschutz wird auch als "Antiblockiersystem" bezeichnet. Der Schleuderschutz ist auch als Antriebsschlupfregelung bekannt.

Ein Nutzfahrzeug mit einem vierkanaligen Antiblockiersystem (ABS) und einer Antriebsschlupfregelung (ASR) ist aus der DE-OS 37 00 716 bekannt. Allerdings hat dieses Fahrzeug nur eine angetriebene Hinterachse sowie eine nicht angetriebene Vor- oder Nachlaufachse. Die beiden Räder der Antriebsachse werden mittels Drehzahlsensoren sensiert. Da wegen der aus Kostengründen nur vierkanaligen Elektronik die beiden Räder der nicht angetriebenen Achse nicht direkt überwacht werden können, müssen Maßnahmen ergriffen werden, um diese nicht sensierten Räder vor einem übermäßigen Schlupf zu sichern.

Aus der DE-OS 36 14 863 ist weiter das automatische Einlegen einer Quer-Differentialsperre im Anschluß an ein Durchdrehsignal (positiver Schlupf) eines angetriebenen Rades bekannt. Eine Querdifferentialsperre bewirkt bekanntlich eine formschlüssige Verbindung der beiden Räder einer Achse. Hierdurch läßt sich die mögliche Traktionskraft dieser Achse erhöhen.

Bei Nutzfahrzeugen mit zwei angetriebenen Hinterachsen gemäß der eingangs genannten Gattung sind die Querdifferentiale der beiden Antriebsachsen durch ein Längsdifferential verbunden. Das Antriebsmoment des Fahrzeugs geht über eine Kardanwelle auf das genannte Längsdifferential. Falls wiederum eine vierkanalige Elektronik verwendet wird, sind nur die Räder einer der Antriebsachsen sensiert und je zwei Antriebsräder seitenweise mit dem gleichen ABS-geregelten Bremsdruck versorgt.

Falls bei ungünstigen Bedingungen (glatte Straße) während des Anfahrens oder während des Bremsens ein Rad oder beide Räder der nicht sensierten Achse durchdrehen oder blockieren, wird dieser unerwünschte Zustand von den beiden Hinterradkanälen der nur vierkanaligen Elektronik nicht erkannt. Ein Übergang zu einer sechskanaligen Elektronik würde jedoch einen erhöhten Aufwand an Sensoren und Elektronik-Komponenten erfordern.

Der Erfindung liegt die Aufgabe zugrunde, bei einem Nutzkraftwagen der eingangs genannten Art ohne wesentliche Erhöhung des baulichen Aufwands und der Kosten eine Erhöhung der Regelgüte sowohl beim Anfahren als auch beim Bremsen zu erzielen.

Diese Aufgabe wird durch die im Patentanspruch 1 angegebene Erfindung gelöst. Die Unteransprüche enthalten zweckmäßige Weiterbildungen der Erfindung.

Durch das erfindungsgemäße Verfahren läßt sich in vorteilhafter Weise eine indirekte Sensierung der beiden nicht direkt sensierten Antriebsräder erzielen.

Eine Ausführungsform der Erfindung wird im Folgenden anhand einer Zeichnung näher erläutert.

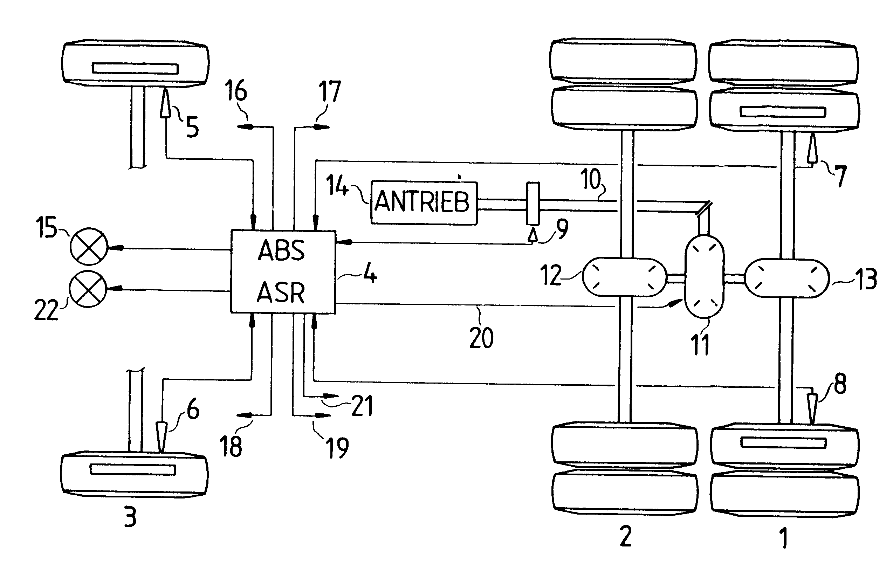

Die Zeichnung zeigt in schematischer, vereinfachter Darstellung das mechanische sowie elektrische Blockschaltbild eines Nutzfahrzeuges mit zwei angetriebenen Hinterachsen (1, 2) sowie einer Vorderachse (3). Eine vierkanalige Elektronik (4) mit Antiblockiersystem (ABS) und Antriebsschlupfregelung (ASR) empfängt über Radgeschwindigkeitssensoren (5 bis 8) Signale über die Drehgeschwindigkeiten der Räder der Vorderachse (3) sowie einer, hier der hinteren Antriebsachse (1). Die Erfindung kann aber auch bei einer zweikanaligen Elektronik angewendet werden, wobei die Vorderräder dann unsensiert sind.

Über einen zusätzlichen Drehzahlsensor (9) wird die Drehzahl der Kardanwelle (10) abgefühlt und der Elektronik (4) ebenfalls mitgeteilt. Die Kardanwelle (10) wird von einem Antrieb (14) angetrieben, in welchem Motor, Kupplung und Getriebe des Nutzkraftfahrzeuges zusammengefaßt sind. Der Drehzahlsensor (9) kann sowohl am Längsdifferential (11) angeordnet sein, er kann aber auch am Ausgang des Antriebs (14) angeordnet sein.

Anstelle eines zusätzlichen Sensors (9) kann auch das für den Tachografen ohnehin vorhandene Geschwindigkeitssignal verwendet werden, soweit es - wie üblich - der Kardanwellengeschwindigkeit proportional ist.

Alternativ kann auch die mittlere Geschwindigkeit der nicht direkt sensierten Antriebsräder im Bereich des betreffenden Achsdifferentials (12) mit einem zusätzlichen Sensor sensiert werden. Ein derartiger Sensor würde dann die Eingangsdrehzahl des Querdifferentials (12) sensieren. Dies bedeutet eine "indirekte" Drehzahlsensierung der Kardanwelle.

Die Elektronik (4) besitzt weiter Ausgangsleitungen (16 bis 19), mit denen in bekannter Weise Magnet-Regelventile der sensierten Räder (5 bis 8) ansteuerbar sind (nicht vollständig dargestellt). Weiterere Ausgänge der Elektronik (4) dienen zur Ansteuerung von Warn- und Anzeigeeinrichtungen (15 und 22), die als Warnlampen oder akustische Signalgeber ausgebildet und im Führerhaus angeordnet sind. Über einen weiteren Ausgang (21) kann die Bremswirkung eines auf die Kardanwelle wirkenden Retarders bzw. einer Motorbremse unwirksam geschaltet werden.

Die Räder der beiden angetriebenen Hinterachsen (1, 2) sind in bekannter Weise über je ein Querdifferential (12, 13) miteinander verbunden. Der Antrieb der beiden Querdifferentiale erfolgt über ein Längsdifferential (11), das wiederum von der Kardanwelle (10) angetrieben wird. Das Längsdifferential (11) ist über eine gesonderte Ausgangsleitung (20) der Elektronik (4) sperrbar.

Die mechanische Ausbildung der einzelnen Differentiale sowie der Sperreinrichtung des Längsdifferentials (11) ist nicht Gegenstand der Erfindung, aber allgemein bekannt und deshalb nicht genauer dargestellt.

Im folgenden wird die Funktionsweise der erfindungsgemäßen Einrichtung erläutert.

Bei ungebremster Fahrt sowie bei einer ungeregelten Teilbremsung oder einem ungeregelten Anfahrvorgang des Nutzfahrzeuges weisen dessen Antriebsräder nur einen sehr geringen Schlupf auf. Die Kardanwelle (10) dreht sich in einem konstanten Drehzahlverhältnis zu den Rädern der beiden Antriebsachsen (1, 2).

Die Verhältnisse ändern sich jedoch, falls bei ungünstigen Straßenbedingungen, beispielsweise bei Schnee oder Eis, eine geregelte Bremsung oder ein geregelter Anfahrvorgang auftritt. In diesem Fall weisen die sensierten Räder der Antriebsachse (1) bedeutend höhere Schlupfwerte auf. Diese werden durch die Elektronik (4) eingeregelt und liegen beispielsweise im Fall einer geregelten Bremsung bei 20 %. Im Fall eines geregelten Anfahrens liegen die durchschnittlichen Schlupfwerte bei etwa 6 %.

In den beiden genannten Fällen können jedoch die Schlupfwerte der beiden Räder der nicht sensierten Antriebsachse (2) bis zu einem Wert von 100 % negativem Schlupf (Blockieren eines Rades) oder bis zu hohen positiven Schlupfwerten (Durchdrehen eines Rades beim Anfahren) anwachsen, ohne daß dies von der Elektronik (4) direkt erkannt wird.

Mit Hilfe der erfindungsgemäßen Anordnung können nun diese unerwünschten Fahrzustände dadurch erkannt werden, daß durch die Elektronik (4) zusätzlich die Drehzahl der Kardanwelle (10) oder die Antriebswinkelgeschwindigkeit des Achsdifferentials (12) der nicht sensierten Antriebsachse (2) ausgewertet wird.

Hierbei können zwei Fälle unterschieden werden. Dreht sich die Kardanwelle schneller als es dem Mittelwert der sensierten Radgeschwindigkeiten entspricht, dann dreht mindestens eines der unsensierten Antriebsräder der Achse (2) durch. Dreht sich die Kardanwelle dagegen langsamer als den Mittelwerten der Radgeschwindigkeiten entsprechend, dann hat mindestens eines der unsensierten Antriebsräder der Achse (2) einen übermäßig hohen Bremsschlupf bzw. ist blockiert. Diese beiden Sonderfälle werden durch die Elektronik (4) erkannt, und daraufhin in geeigneter Weise Maßnahmen ergriffen. Dazu gehören bei zu langsam drehender Kardanwelle das Ansteuern einer ABS-Warnlampe, das Aufheben der Bremswirkung eines Retarders, das Schalten einer an sich bekannten Bremsdruckreduzierung für die unsensierten Räder und/oder das im folgenden weiter beschriebene Synchronisieren und Einlegen der Längsdifferentialsperre. Bei zu schnell drehender Kardanwelle erfolgt das Ansteuern einer ASR-Anzeigelampe und/oder das Synchronisieren und Einlegen der Längsdifferentialsperre.

Die Sperrung erfolgt in vorteilhafter Weise nur bei geringen Fahrgeschwindigkeiten, z.B. bis 30 km/h. Die erforderliche Maßnahme zur Synchronisation des Längsdifferentials (11) schließt in vorteilhafter Weise während des Anfahrens eine Zurücknahme der Antriebsleistung ein. Sobald dadurch eine Gleichheit der Radgeschwindigkeiten mit der Kardanwellengeschwindigkeit erreicht ist, kann die Sperre des Längsdifferentials (11) eingelegt werden und danach die Motorleistung automatisch wieder erhöht werden.

Während eines Bremsvorganges schließen die Maßnahmen zur Synchronisation des Längsdifferentials (11) vorteilhaft einen geregelten Bremsdruckabbau ein. Hierdurch werden die Schlupfwerte der sensierten Antriebsräder zunächst kurzzeitig auf sehr niedrige Werte abgeregelt. Sobald die Drehzahl der Kardanwelle (10) mit den Drehzahlen der sensierten Antriebsräder der Antriebsachse (1) hinreichend synchron ist, wird wiederum die Längssperre eingelegt, und die Räder wieder auf optimalen Schlupf eingebremst. Die Sperre sollte in diesem Fall bis zum Ende der jeweiligen Bremsung eingelegt bleiben.

Es ist auch möglich, die Sperrung des Längsdifferentials (11) nur während einer festen Sperrzeit aufrecht zu erhalten. Während der Sperrzeit des Längsdifferentials (11) ist vorteilhaft durch die Elektronik (4) die Warnvorrichtung (15) ansteuerbar.

Mit dem erfindungsgemäßen Verfahren ergibt sich eine Verbesserung sowohl der ABS- als auch der ASR-Funktion gegenüber dem ursprünglichen Vierkanalsystem bei geringeren Kosten als mit dem vollständigen Sechskanalsystem. Insbesondere wird ein Durchdrehen oder ein Blockieren der unsensierten Räder vermieden.

**Patentansprüche**

1. Blockier- und/oder Schleuderschutz-Verfahren für Nutzkraftwagen mit einer Vorderachse (3) und zwei angetriebenen Hinterachsen (1, 2), wobei die Elektronik (4) des Blockier- und/oder Schleuderschutzes mindestens die Geschwindigkeiten der Räder einer der beiden angetriebenen Hinterachsen mittels Drehzahlsenso-

ren (7, 8) sensiert, <u>dadurch gekennzeichnet,</u> daß

a) mit einem zusätzlichen Sensor (9) die Drehzahl der Kardanwelle (10) sensiert wird, und dieses Signal der Elektronik (4) zugeleitet wird;

b) die Elektronik (4) auswertet, ob die Drehzahl der Kardanwelle (10) unter Berücksichtigung eines konstanten Übersetzungsfaktors von der mittleren Drehzahl der sensierten Räder (5 bis 8) abweicht;

c) die Elektronik (4) bei festgestellter Abweichung eine Warnung oder Information an den Fahrer und/oder Maßnahmen zur Synchronisation der Geschwindigkeiten der Kardanwelle (10) und der sensierten Antriebsräder bewirkt.

2. Verfahren nach Anspruch 1, <u>dadurch gekennzeichnet,</u> daß für die Warnung bzw. Information an den Fahrer die ABS-Warnlampe (15) bzw. die ASR-Anzeigelampe (22) angesteuert wird.

3. Verfahren nach Anspruch 1, <u>dadurch gekennzeichnet,</u> daß bei zu langsam drehender Kardanwelle (10) die Bremswirkung eines Retarders aufgehoben wird.

4. Verfahren nach Anspruch 1, <u>dadurch gekennzeichnet,</u> daß bei zu langsam drehender Kardanwelle (10) die Bremswirkung der Betriebsbremsen an den nicht sensierten Antriebsräder gegenüber der an den sensierten Antriebsrädern in an sich bekannter Weise reduziert wird.

5. Verfahren nach Anspruch 1, <u>dadurch gekennzeichnet,</u> daß bei zu langsam oder zu schnell drehender Kardanwelle (10) die manuelle Betätigung der Sperre des Längsdifferentials (11) zurückgehalten (gesperrt) wird.

6. Verfahren nach Anspruch 1 bis 5, <u>dadurch gekennzeichnet,</u> daß die Elektronik (4) nach erfolgter Synchronisation das Längsdifferential (11) automatisch sperrt.

7. Verfahren nach Anspruch 1 bis 6, <u>dadurch gekennzeichnet,</u> daß während des Anfahrens die Maßnahmen zur Synchronisation des Längsdifferentials (11) eine Zurücknahme der Antriebsleistung einschließen.

8. Verfahren nach Anspruch 1, 6 und 7 <u>dadurch gekennzeichnet,</u> daß die Maßnahmen zur Synchronisation und anschliessenden Sperrung des Längsdifferentials (11) nur bei einer Fahrzeuggeschwindigkeit durchgeführt werden, die unterhalb eines Grenzwertes liegt.

9. Verfahren nach Anspruch 8, <u>dadurch gekennzeichnet,</u> daß der Grenzwert etwa bei 30 km/h liegt.

10. Verfahren nach Anspruch 1 bis 6, <u>dadurch gekennzeichnet,</u> daß während des Bremsens die Maßnahmen zur Synchronisation des Längsdifferentials (11) einen geregelten Bremsdruckabbau einschließen

11. Verfahren nach Anspruch 1 bis 10, <u>dadurch gekennzeichnet,</u> daß die Sperrung des Längsdifferentials (11) nur während einer festen Sperrzeit wirksam ist.

12. Verfahren nach Anspruch 1 bis 10, <u>dadurch gekennzeichnet,</u> daß die Sperrung des Längsdifferentials (11) bis zum Ende des jeweiligen Brems vorganges wirksam ist.

13. Verfahren nach Anspruch 1 bis 12, <u>dadurch gekennzeichnet,</u> daß während der Sperrzeit des Längsdifferentials (11) eine Warnvorrichtung (15) durch die Elektronik (4) ansteuerbar ist.

14. Verfahren nach einem oder mehreren der vorhergehenden Ansprüche, <u>dadurch gekennzeichnet,</u> daß als zusätzlicher Sensor (9) der für den Fahrzeug-Tachografen ohnehin vorhandene Geschwindigkeitssensor bzw. dessen von einem elektronischen Tachografen aufbereitetes Signal verwen det wird.

15. Verfahren nach einem oder mehreren der vorhergehenden Ansprüche, <u>dadurch gekennzeichnet,</u> daß der zusätzliche Sensor (9) die mittlere Geschwindigkeit der nicht direkt sensierten Antriebsräder an der Eingangswelle des zugehörigen Achsdifferentials (12) sensiert.

16. Verfahren nach einem oder mehreren der Ansprüche 1 bis 14, <u>dadurch gekennzeichnet,</u> daß der zusätzliche Sensor (9) direkt an der Kardanwelle (10) angebracht ist und deren Drehzahl sensiert.

17. Verfahren nach einem oder mehreren der Ansprüche 1 bis 14, <u>dadurch gekennzeichnet,</u> daß der zusätzliche Sensor (9) am Ausgang des Antriebs (14) angeordnet ist, und die Drehzahl der Kardanwelle (10) unter Berücksichtigung der jeweiligen Getriebeübersetzung sensiert wird.

## Claims

1. A method for protecting commercial vehicles with a front axle (3) and two driven rear axles (1, 2) against locking and/or skidding, in which by means of speed sensors (7, 8) the electronics (4) of the anti-lock or anti-skid system sense at least the speed of the wheels of one of the two driven rear axles, characterized in that

a) the speed of the cardan shaft (10) is sensed with an additional sensor (9) and this signal is fed to the electronics (4);

b) taking into account a constant transmission ratio, the electronics (4) evaluates whether the speed of the cardan shaft (10) deviates from the mean speed of the sensed wheels (5 to 8);

c) when a deviation is detected the electronics (4) warn or inform the driver and/or implement measures to synchronise the speeds of the cardan shaft (10) and the sensed driven wheels.

2. A method according to claim 1, characterized in that the ABS-warning lamp (15) and the ASR indicator (22) are triggered to warn or inform the driver.

3. A method according to claim 1, characterized in that when the cardan shaft (10) is rotating too slowly, the braking action of a retarder is discontinued.

4. A method according to claim 1, characterized in that when the cardan shaft (10) is rotating too slowly, the braking action of the service brakes at the non-sensed driven wheels is reduced in a manner known per se compared with the braking action at the sensed driven wheels.

5. A method according to claim 1, characterized in that when the cardan shaft (10) is rotating too slowly or too quickly, manual operation of the locking means of the longitudinal differential (11) is arrested (locked).

6. A method according to claim 1 to 5, characterized in that the electronics (4) automatically lock the longitudinal differential (11) after synchronisation has been effected.

7. A method according to claim 1 to 6, characterized in that during starting-up the measures for synchronising the longitudinal differential (11) include cancelling the drive output.

8. A method according to claim 1, 6 and 7, characterized in that the measures for synchronising and subsequently locking the longitudinal differential (11) are implemented only at a vehicle speed that lies below a limit value.

9. A method according to claim 8, characterized in that the limit value is about 30 km/h.

10. A method according to claim 1 to 6, characterized in that during braking the measures for synchronising the longitudinal differential (11) include a controlled reduction in brake pressure.

11. A method according to claim 1 to 10, characterized in that the locking of the longitudinal differential (11) is effective only during a fixed locking time.

12. A method according to claim 1 to 10, characterized in that the locking of the longitudinal differential (11) is effective to the end of the particular braking operation.

13. A method according to claim 1 to 12, characterized in that during the time that the longitudinal differential (11) is locked, a warning device (15) can be triggered by the electronics (4).

14. A method according to one or more of the preceding claims, characterized in that the speed sensor already present for the vehicle tachograph or the signal thereof processed by an electronic tachograph is used as additional sensor (9).

15. A method according to one or more of the preceding claims, characterized in that the additional sensor (9) senses the mean speed of the driven wheels that are not directly sensed at the input shaft of the associated axle differential (12).

16. A method according to one or more of claims 1 to 14, characterized in that the additional sensor (9) is arranged directly on the cardan shaft (10) and senses the speed thereof.

17. A method according to one or more of claims 1 to 14, characterized in that the additional sensor (9) is arranged at the output of the drive means (14) and the speed of the cardan shaft (10) is sensed taking into account the particular gear transmission ratio.

## Revendications

1. Procédé de sécurité anti-blocage et/ou anti-patinage pour véhicules utilitaires comportant un essieu avant (3) et deux essieux arrière moteurs (1, 2), l'électronique (4) du système de sécurité anti-blocage et/ou anti-patinage contrôlant au moins les vitesses des roues d'un des deux essieux arrière moteurs, au moyen de capteurs de vitesses de rotation (7,8), caractérisé en ce que

a) la vitesse de rotation de l'arbre de transmission (10) est contrôlée au moyen d'un capteur supplémentaire (9), ce signal étant transmis à l'électronique (4);

b) l'électronique (4) détermine si la vitesse de rotation de l'arbre de transmission (10) diffère de la vitesse de rotation moyenne des roues contrôlées (5 à 8) en tenant compte d'un rapport de démultiplication constant;

c) si une différence est constatée, l'électronique (4) fournit une alarme ou une information au conducteur et/ou engendre des mesures pour la synchronisation des vitesses de l'arbre de transmission (10) et des roues motrices contrôlées.

2. Procédé selon la revendication 1, caractérisé en ce que pour l'alarme ou l'information du conducteur, on commande respectivement la lampe d'alarme anti-blocage "ABS" (15) et la lampe d'indication anti-patinage "ASR" (22).

3. Procédé selon la revendication 1, caractérisé en ce que dans le cas d'un arbre de transmission (10) tournant trop lentement, l'action de freinage d'un ralentisseur est supprimée.

4. Procédé selon la revendication 1, caractérisé en ce que dans le cas d'un arbre de transmission (10) tournant trop lentement, l'action de freinage des freins de service sur les roues motrices non contrôlées est réduite de manière connue en soi, par rapport à celles sur les roues motrices contrôlées.

5. Procédé selon la revendication 1, caractérisé en ce que dans le cas d'un arbre de transmission tournant trop lentement ou trop vite, l'actionnement manuel du verrouillage du différentiel longitudinal (11) est retenu (verrouillé).

6. Procédé selon les revendications 1 à 5, caractérisé en ce qu'après l'établissement de la synchronisation, l'électronique (4) verrouille automatiquement le différentiel longitudinal (11).

7. Procédé selon les revendications 1 à 6, caractérisé en ce que pendant le démarrage, les mesures destinées à réaliser la synchronisation du différentiel longitudinal (11) englobent une réduction de la puissance d'entrainement.

8. Procédé selon les revendications 1, 6 et 7, caractérisé en ce que les mesures destinées à réaliser la synchronisation et le verrouillage qui suit du différentiel longitudinal (11), ne sont exécutées que pour une vitesse de circulation située en-dessous d'une valeur limite.

9. Procédé selon la revendication 8, caractérisé en ce que la valeur limite se situe environ à 30 km/h.

10. Procédé selon les revendications 1 à 6, caractérisé en ce qu'au cours du freinage, les mesures destinées à réaliser la synchronisation du différentiel longitudinal (11), englobent une réduction régulée de la pression de freinage.

11. Procédé selon les revendications 1 à 10, caractérisé en ce que le verrouillage du différentiel longitudinal (11) n'est actif que pendant une période de verrouillage fixe.

12. Procédé selon les revendications 1 à 10, caractérisé en ce que le verrouillage du différentiel longitudinal (11) est actif jusqu'à la fin de la phase de freinage considérée.

13. Procédé selon les revendications 1 à 12, caractérisé en ce que pendant la période de verrouillage du différentiel longitudinal (11), l'électronique (4) peut commander un dispositif d'alarme (15).

14. Procédé selon l'une ou plusieurs des revendications précédentes, caractérisé en ce que l'on utilise en guise de capteur supplémentaire (9) le capteur de vitesse existant de toute façon pour l'indicateur de vitesse du véhicule, ou le signal élaboré par un indicateur de vitesse électronique.

15. Procédé selon l'une ou plusieurs des revendications précédentes, caractérisé en ce que le capteur supplémentaire (9) contrôle la vitesse moyenne des roues motrices non directement contrôlées, au niveau de l'arbre d'entrée du différentiel d'essieu (12) correspondant.

16. Procédé selon l'une ou plusieurs des revendications 1 à 14, caractérisé en ce que le capteur supplémentaire (9) est monté directement sur l'arbre de transmission (10) et contrôle sa vitesse de rotation.

17. Procédé selon l'une ou plusieurs des revendications 1 à 14, caractérisé en ce que le capteur supplémentaire (9) est monté à la sortie du dispositif d'entrainement (14) et contrôle la vitesse de rotation de l'arbre de transmission (10) en tenant compte du rapport de boite considéré.